# EUROPEAN PATENT APPLICATION

(11) **EP 4 169 385 A1**
(43) Date of publication of application: **26.04.2023**
(21) Application number: 20940536.4
(22) Date of filing: 22.07.2020
(51) Int. Cl.: A21C 11/24, A21C 11/22

(54) **MULTIFUNCTIONAL NOODLE MAKER**

(30) Priority: 17.06.2020 CN 202010555200; 17.06.2020 CN 202021129701 U
(71) Applicant: Dongguan Zhen Zhong Kang Precision Transmission Technology Co., Ltd, Dongguan, Guangdong 523000 (CN)
(72) Inventor: NI, Tangrong, Dongguan, Guangdong 523000 (CN); WAN, Lijun, Dongguan, Guangdong 523000 (CN); XIE, Jinxiang, Dongguan, Guangdong 523000 (CN); XIE, Zhenhai, Dongguan, Guangdong 523000 (CN)
(74) Representative: Osterhoff, Utz
(86) International application number: PCT/CN2020/103563
(87) International publication number: WO 2021/253566

(57) **Abstract**

The present application provides a multi-functional noodle making device (100). The multi-functional noodle making device includes a housing (10), a pressing roller mechanism (20), a cutting roller mechanism (30) and a power member (40). At least two noodle making grooves (A) are defined on the upper surface of the housing (10), and at least two noodle exiting grooves (B) are correspondingly defined on the lower surface of the housing (10). The pressing roller mechanism and the cutting roller mechanism are both arranged inside the housing, and the pressing roller mechanism is located in one of the noodle making grooves. The pressing roller mechanism and the cutting roller mechanism can be driven and connected to drive the pressing roller mechanism to carry out pressing operation and drive the cutting roller mechanism to carry out cutting operation through a power member, which is beneficial for consumers to make two different noodles at one time, and reduces the purchase cost of consumers.

## Description

### CROSS REFERENCE TO RELATED APPLICATION

The present application claims priority to Chinese Patent Application No. 202010555200.9, filed on June 17, 2020, with the Title "Multi-functional Noodle Making Device", and Chinese Patent Application No. 20202112970.2, filed on June 17, 2020, with the Title "Multi-functional Noodle Making Device", the entire contents of which are incorporated herein by reference.

### TECHNICAL FIELD

The present application relates to the technical field of food processing equipments, in particular to a multi-functional noodle making device.

### BACKGROUND

The statement herein only provides background information related to the present application and does not necessarily constitute the prior art.

With the gradual improvement of people's living conditions, household appliances are more and more widely used. At present, there are noodle maker which can only press doughs to crusts or can only cut noodles from doughs on the market. Consumers need to have more than two products at the same time to make noodles, which costs more and is not conducive to the consumers' use of the noodle makers as well as to the promotion of noodle makers.

### SUMMARY

The main purpose of the present application is to provide a multi-functional noodle making device, which aims to solve the technical problem that the noodle making devices with single dough pressing or cutting on the market are not conducive to the consumers' use.

To achieve the above purpose, the present application provides a multi-functional noodle making device, which includes:
a housing, an upper surface of the housing defined with at least two noodle making grooves, a lower surface of the housing defined with at least two noodle exiting grooves, and the noodle making grooves and the noodle exiting grooves being arranged in a one-to-one correspondence;
a pressing roller mechanism disposed in the housing, and located in one of the noodle making grooves;
a cutting roller mechanism disposed in the housing, located in another of the noodle making grooves, and connected to the pressing roller mechanism for transmission of motion;
a power member disposed on the housing, an output end of the power member being connected to the pressing roller mechanism or the cutting roller mechanism for transmission of motion; and
when a dough is placed in the two noodle making grooves, the power member drives the pressing roller mechanism to perform a pressing operation and the cutting roller mechanism to perform a cutting operation.

Preferably, the housing includes:
an outer housing, the noodle making grooves and the noodle exiting grooves being respectively disposed on an upper surface and a lower surface of the outer housing;
a first partition wall disposed in the outer housing; and
a second partition wall disposed in the outer housing, two ends of the pressing roller mechanism and two ends of the cutting roller mechanism are respectively disposed on the first partition wall and the second partition wall, and the power member is disposed on a surface of the first partition wall away from the second partition wall.

Optionally, the second partition wall is defined with an adjustment hole, the pressing roller mechanism includes a first pressing roller and a second pressing roller, two ends of the first pressing roller are respectively rotatably disposed on the first partition wall and the second partition wall, a first end of the second pressing roller is rotatably disposed on the first partition wall, a second end of the second pressing roller is disposed in the adjustment hole, the first pressing roller and the second pressing roller are arranged side by side and at intervals, a diameter of the adjustment hole is larger than a diameter of the second pressing roller, and the multi-functional noodle making device further includes:
a first gear rotatably disposed on the second partition wall, and connected to an end of the first pressing roller facing the adjustment hole;
an adjustment gear sleeved on the second end of the second pressing roller, abutting against the second partition wall, and meshed with the first gear; and
an adjustment mechanism disposed on the second partition wall, and configured to adjust a position of the second end of the second pressing roller in the adjustment hole to adjust a distance between the first pressing roller and the second pressing roller.

Optionally, the adjustment mechanism further includes:
a knob rotatably disposed on a side wall of the outer housing away from the power member, the knob being penetrated by the second end of the second pressing roller and rotatably connected to the second end of the second pressing roller; and
the position of the second end of the second pressing roller in the adjustment hole is adjusted by adjusting a position of the knob on the outer housing.

Optionally, the knob includes a knob housing defining a storage groove and a cover covering the storage groove to form a cavity, the second end of the second pressing roller is extended into the cavity, the adjustment mechanism further includes:
a spring sleeved on the second end of the second pressing roller; and
a nut threaded with the second end of the second pressing roller, an outer diameter of the nut being larger than a diameter of the spring, and an inner diameter of the nut being smaller than the diameter of the spring, two ends of the spring respectively abutting against a bottom of the storage groove and the nut, and the nut pressing an end of the spring away from the cover against the bottom of the storage groove.

Optionally, a surface of the knob housing facing the second partition wall is of a circular structure, a plurality of positioning grooves are defined in a ring on the bottom of the storage groove, the adjustment mechanism further includes:
a positioning member disposed on the second partition wall and received in one of the positioning grooves.

Optionally, the cutting roller mechanism includes a first cutting roller and a second cutting roller, two ends of the first cutting roller and two ends of the second cutting roller are respectively rotatably arranged on the first partition wall and the second partition wall, and the two ends of the first cutting roller and the second cutting roller are parallel to each other and spaced apart from each other, a second gear and a third gear are rotatably disposed on the second partition wall, the second gear is meshed with the third gear, an end of the first cutting roller away from the first partition wall is connected to the second gear, and an end of the second cutting roller away from the first partition wall is connected to the third gear, the multi-functional noodle making device further includes:
a transmission mechanism disposed on the first partition wall, and connected to the output end of the power member, the first cutting roller, the second cutting roller and the first pressing roller respectively for transmission of motion, the power member drives the first cutting roller, the second cutting roller and the first pressing roller to rotate through the transmission mechanism.

Optionally, the transmission mechanism includes:
a driving gear rotatably disposed on the first partition wall, and connected to an end of the first pressing roller away from the second partition wall and to the output end of the power member;
an idler gear rotatably disposed on the first partition wall, meshing with the driving gear, and positioned between the first pressing roller and the first cutting roller; and
a driven gear rotatably disposed on the first partition wall, connected to an end of the first cutting roller away from the second partition wall, and meshing with the idler gear.

Optionally, the transmission mechanism includes:
a driving pulley rotatably disposed on the first partition wall, and connected to an end of the first pressing roller away from the second partition wall and to the output end of the power member; and
a driven pulley rotatably disposed on the first partition wall, and connected to an end of the first cutting roller away from the second partition wall and to the driving pulley through belt transmission.

Optionally, the multi-functional noodle making device further includes:
a scraper disposed on the cutting roller mechanism and configured to remove dough remaining on the cutting roller mechanism.

Optionally, the outer housing includes:
an upper outer housing, the pressing roller mechanism, the cutting roller mechanism and the power member are all disposed on the upper outer housing, and the at least two noodle making grooves are defined on the upper outer housing; and
a low outer housing detachably disposed on the upper outer housing, and defining the at least two noodle exiting grooves.

Optionally, the multi-functional noodle making device further includes:
at least two dust-proof covers respectively covering the two noodle making groove.

Optionally, the pressing roller mechanism and the cutting roller mechanism are connected by gear mechanisms for transmission of motion.

Optionally, the pressing roller mechanism and the cutting roller mechanism are connected by belt mechanisms for transmission of motion.

Optionally, the power member is a motor.

Optionally, an outside wall of the knob housing is marked with scales.

Optionally, the distance between the first pressing roller and the second pressing roller is not less than 0.3 mm and not more than 3mm.

In the technical solutions of the present application, at least two noodle making grooves are defined on the upper surface of the housing, and at least two noodle exiting grooves are correspondingly defined on the lower surface of the housing. The pressing roller mechanism and the cutting roller mechanism are both arranged inside the housing, and the pressing roller mechanism is located in one of the noodle making grooves. The pressing roller mechanism and the cutting roller mechanism can be driven and connected to drive the pressing roller mechanism to carry out pressing operation and drive the cutting roller mechanism to carry out cutting operation through a power member. Users can place the kneaded dough in two noodle making grooves, flatten and cut it by the pressing roller mechanism and the cutting roller mechanism, and finally drop it from the two noodle making grooves respectively, which is beneficial for consumers to make two different noodles at one time without purchasing different noodle making machines, reduces the purchase cost of consumers, and is also convenient for the promotion of noodle making machines.

### BRIEF DESCRIPTION OF THE DRAWINGS

To more clearly illustrate technical solutions in the embodiments or exemplary structures of the present application, the following will briefly introduce the drawings that need to be used in the description of the embodiments or exemplary structures. Obviously, the drawings in the following description are only some embodiments of this application. For those of ordinary skill in the art, without creative effort, other drawings can be obtained according to the structures shown in these drawings.
FIG. 1 is a schematic structural diagram of a multi-functional noodle making device according to an embodiment of the the present application.
FIG. 2 is another schematic structural diagram of the multi-functional noodle making device according to an embodiment of the the present application.
FIG. 3 is yet another schematic structural diagram of the multi-functional noodle making device according to an embodiment of the the present application.
FIG. 4 is yet another schematic structural diagram of the multi-functional noodle making device according to an embodiment of the the present application.
FIG. 5 is a schematic structural diagram of an adjustment mechanism of the multi-functional noodle making device according to an embodiment of the the present application.
FIG. 6 is a schematic structural diagram of a second partition wall of the multi-functional noodle making device according to an embodiment of the the present application.
FIG. 7 is another schematic structural diagram of the adjustment mechanism of the multi-functional noodle making device according to an embodiment of the the present application.
FIG. 8 is a structural schematic diagram (1) of a first partition wall of the multi-functional noodle making device according to an embodiment of the the present application.
FIG. 9 is a structural schematic diagram (2) of the first partition wall of the multi-functional noodle making device according to an embodiment of the the present application.

The realization of the objective, functional characteristics, and advantages of the present application are further described with reference to the accompanying drawings.

### DETAILED DESCRIPTION OF THE EMBODIMENTS

The technical solutions of the embodiments of the present application will be described clearly in the following with reference to the accompanying drawings. It is obvious that the embodiments described are only some rather than all of the embodiments of the present application. Based on the embodiments of the present application, all other embodiments obtained by those skilled in the art without creative efforts shall fall within the scope of the present application.

It should be noted that all the directional indications (such as up, down, left, right, front, rear...) in the present application are only used to explain the relative positional relationship, movement, or the like of the components in a certain posture (as shown in the drawings). If the specific posture changes, the directional indication will change accordingly.

Besides, the descriptions associated with, e.g., "first" and "second," in the present application are merely for descriptive purposes, and cannot be understood as indicating or suggesting relative importance or impliedly indicating the number of the indicated technical feature. Therefore, the feature associated with "first" or "second" can expressly or impliedly include at least one such feature. In addition, the technical solutions of the various embodiments can be combined with each other, but the combinations must be based on the realization of those skilled in the art. When the combination of technical solutions is contradictory or cannot be achieved, it should be considered that such a combination of technical solutions does not exist, nor does it fall within the scope of the present application.

The present application provides a multi-functional noodle making device 100.

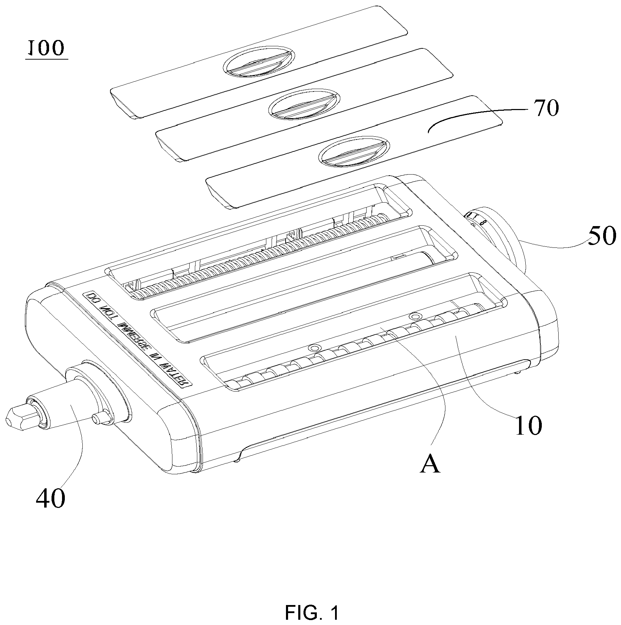

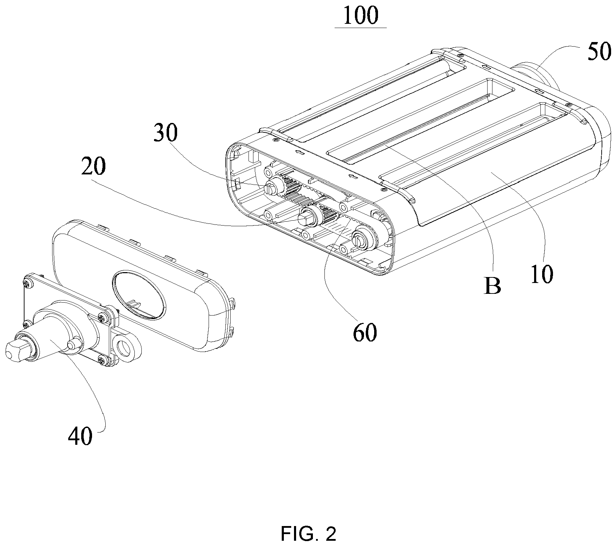

As shown in FIGS. 1 to 3, the multi-functional noodle making device 100 includes a housing 10, an upper surface of the housing 10 being defined with at least two noodle making grooves A, a lower surface of the housing 10 being provided with at least two noodle exiting grooves B, and the noodle making grooves A and the noodle exiting grooves B being arranged in a one-to-one correspondence; a pressing roller mechanism 20 disposed in the housing 10, and located in one of the noodle making grooves A; a cutting roller mechanism 30 disposed in the housing 10 and located in the other of the noodle making grooves A, and the pressing roller mechanism 20 being connected to the cutting roller mechanism 30 for transmission of motion; and a power member 40 disposed on the housing 10, an output end of the power member 40 being connected to the pressing roller mechanism 20 or the cutting roller mechanism 30 for transmission of motion. A dough is placed in the two noodle making grooves A, and the power member 40 drives the pressing roller mechanism 20 to perform a pressing operation and the cutting roller mechanism 30 to perform a cutting operation.

In this embodiment, a plurality of noodle making mechanisms are assembled in one housing 10. For example, at least two noodle making grooves A can be defined on the upper surface of the housing 10, and at least two noodle exiting grooves B can be defined on the lower surface of the housing 10. The housing 10 has a hollow structure, and the pressing roller mechanism 20 and the cutting roller mechanism 30 are both arranged inside the housing 10. The pressing roller mechanism 20 is located in one of the noodle making grooves A and the cutting roller mechanism 30 is located in the other of the noodle making grooves A to form a two-in-one multi-functional noodle making device 100. It is understandable that two different specifications of cutting roller mechanisms 30 can be provided, and the two cutting roller mechanisms 30 are respectively provided to cut a dough into noodles of different widths, and the two cutting roller mechanisms 30 can be respectively provided on two sides of the pressing roller mechanism 20 to form a three-in-one multi-functional noodle making device 100.

Secondly, the pressing roller mechanism 20 and the cutting roller mechanism 30 are connected for transmission of motion. For example, the pressing roller mechanism 20 and the cutting roller mechanism 30 are connected by a gear mechanism or a belt mechanism, the pressing roller mechanism 20 is driven to perform the pressing operation and the cutting roller mechanism 30 is driven to perform the cutting operation by one power member 40. It is understandable that at least two power members 40 may be provided, with the pressing roller mechanism 20 being driven by one of the power members 40 and the cutting roller mechanism 30 being driven by the other power member 40, which is not specifically limited herein.

It is understandable that the power member 40 can be a motor or the like.

A user can place a kneaded dough in the two noodle making grooves A. The dough is flatten and cut by the pressing roller mechanism 20 and the cutting roller mechanism 30, and finally drops out from the two noodle exiting grooves B respectively. It is beneficial for a consumer to make two different noodles at one time without purchasing different noodle making devices, thereby reduces the purchasing cost of the consumer, and brings convenience for the promotion of noodle making devices.

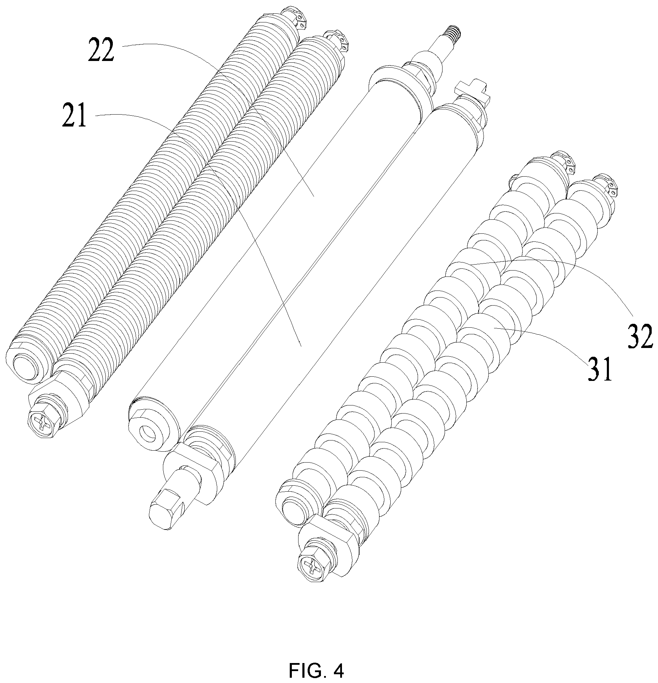

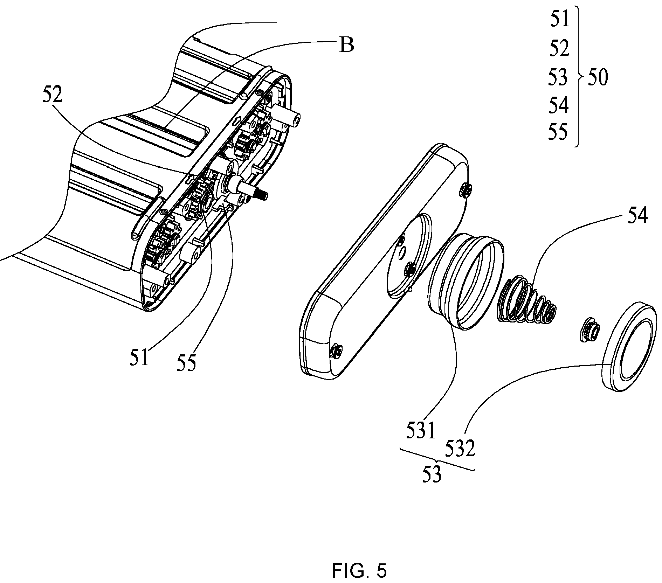

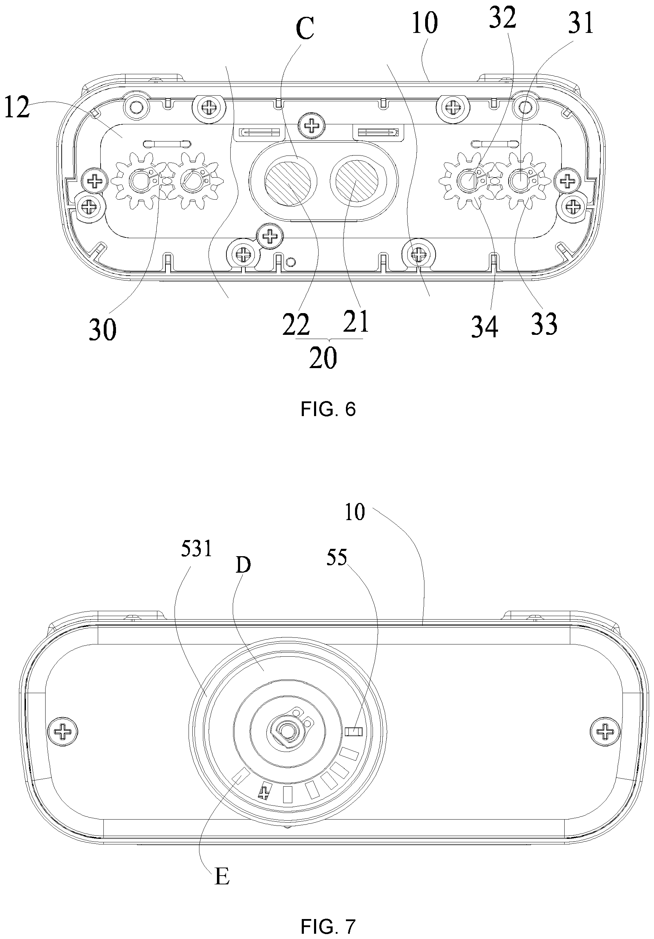

As shown in FIGS. 4 to 7, specifically, the housing 10 includes an outer housing, where the noodle making groove A and the noodle exiting groove B are respectively defined on an upper surface and a lower surface of the outer housing; a first partition wall 11 and a second partition wall 12 disposed in the outer housing. Two ends of the pressing roller mechanism 20 and two ends of the cutting roller mechanism 30 are respectively disposed on the first partition wall 11 and the second partition wall 12. The power member 40 is disposed on a surface of the first partition wall 11 away from the second partition wall 12. In this embodiment, in order to reduce contamination of noodles by an external driving member such as the power member 40, separating the noodles from the external driving member can be made by the first partition wall 11 and the second partition wall 12. The pressing roller mechanism 20 and the cutting roller mechanism 30 are both located between the first partition wall 11 and the second partition wall 12, and the power member 40 is disposed on the surface of the first partition wall 11 away from the second partition wall 12 to prevent oil on the power member 40 from contaminating the noodles.

Specifically, the second partition wall 12 is defined with an adjustment hole C. The pressing roller mechanism 20 includes a first pressing roller 21 and a second pressing roller 22. Two ends of the first pressing roller 21 are respectively rotatably disposed on the first partition wall 11 and the second partition wall 12. A first end of the second pressing roller 22 is rotatably disposed on the first partition wall 11, and a second end of the second pressing roller 22 is disposed in the adjustment hole C. The first pressing roller 21 and the second pressing roller 22 are arranged side by side and at intervals. A diameter of the adjustment hole C is larger than a diameter of the second pressing roller 22. The multi-functional noodle making device 100 further includes: a first gear rotatably disposed on the second partition wall 12, and connected to the end of the first pressing roller 21 facing the adjustment hole C; an adjustment gear 52 sleeved on the second end of the second pressing roller 22, abutting against the second partition wall 12, and meshed with the first gear; an adjustment mechanism disposed on the second partition wall 12, and configured to adjust a position of the second end of the second pressing roller 22 in the adjustment hole C to adjust a distance between the first pressing roller 21 and the second pressing roller 22.

In this embodiment, the both ends of the first pressing roller 21 are rotatably disposed on the first partition wall 11 and the second partition wall 12 respectively, and the first pressing roller 21 and the second pressing roller 22 are arranged at intervals to form a pressing gap. The end of the first pressing roller 21 facing the adjustment hole C is provided with the first gear, and the second end of the second pressing roller 22 is provided with the adjustment gear 52 meshing with the first gear. One of the first pressing roller 21 and the second pressing roller 22 is driven to move by the other by meshing the first gear with the adjustment gear 52. After the noodles pass through the pressing gap, the noodles are compacted by the first pressing roller 21 and the second pressing roller 22 to form a sheet-like structure. In order to adjust the gap between the first pressing roller 21 and the second pressing roller 22 so as to press noodles of different thicknesses. The diameter of the adjustment hole C is larger than the diameter of the second pressing roller 22, so that an eccentric shaft structure is formed between the second end of the second pressing roller 22 and the adjustment hole C. It is possible to adjust the position of the second end of the second pressing roller 22 in the adjustment hole C by providing the adjustment mechanism on the second partition wall 12, thereby to adjust a distance between an outer peripheral wall of the first pressing roller 21 and an outer peripheral wall of the second pressing roller 22.

Understandably, the adjustment mechanism may include a sliding rail, a sliding block. A shaft sleeve is sleeved on the sliding block, so that the second end of the second pressing roller 22 is rotatably disposed in the shaft sleeve. The sliding rail is located horizontally, and a center of the adjustment hole C is located on the sliding rail, so that the sliding block is slidably disposed on the sliding rail. By adjusting a position of the sliding block on the sliding rail, the position of the second end of the second pressing roller 22 in the adjustment hole C is adjusted, and thus the distance between the first pressing roller 21 and the second pressing roller 22 is adjusted. In addition to the above ways, other mechanical transmission ways can also be used, which are not specifically limited herein.

Specifically, the adjustment mechanism further includes: a knob 53 rotatably disposed on a side wall of the outer housing away from the power member 40. The second end of the second pressing roller 22 penetrates through the knob 53 and is rotatably connected to the knob 53. The position of the second end of the second pressing roller 22 in the adjustment hole C is adjusted by adjusting a position of the knob 53 on the outer housing. In this embodiment, the knob 53 is rotatably disposed on the side wall of the outer housing away from the power member 40. Since the first gear is rotatably provided on the second partition wall 12, and the adjustment gear 52 can slide on a surface of the second partition wall 12, by adjusting the position of the knob 53 on the outer housing, the second end of the second pressing roller 22 can be positionally shifted in the adjustment hole C, thereby changing the gap between the first pressing roller 21 and the second pressing roller 22. Generally, the distance between the first pressing roller 21 and the second pressing roller 22 is no less than 0.3 mm and no more than 3 mm.

Specifically, the knob 53 includes a knob housing 531 provided with a storage groove D, and a cover 532 covering the storage groove D to form a cavity. The second end of the second pressing roller 22 is extended into the cavity. The adjustment mechanism further includes a spring 54 sleeved on the second end of the second pressing roller 22 and a nut (not shown). The nut is mated with threads formed on the second end of the second pressing roller 22. An outer diameter of the nut is larger than a diameter of the spring 54, and an inner diameter of the nut is smaller than the diameter of the spring 54. Both ends of the spring 54 are respectively abutted against a bottom of the storage groove D and the nut, and the nut presses the end of the spring 54 away from the cover 532 tightly against the bottom of the storage groove D.

In this embodiment, the spring 54 can be disposed in the storage groove D defined on the knob housing 531. When the second end of the second pressing roller 22 extends into the cavity, the spring 54 is sleeved onto the second end of the second pressing roller 22. The nut mates with threads on the second end of the second pressing roller 22 so that the nut compresses one end of the spring 54. Both ends of the spring 54 respectively abut against the bottom of the storage groove D and the cover 532. In an initial state, the spring 54 has an elastic force. After the user stretches the knob housing 531 in an axial direction of the second pressing roller 22, the spring 54 is compressed, a gap is formed between that knob housing 531 and the outer housing. The user can adjust a position of the knob housing 531 and adjust the gap between the second pressing roller 22 and the first pressing roller 21. After the adjustment is completed, the user releases and resets the spring 54. With the elastic force of the spring 54, the knob housing 531 is tightly attached to the side wall of the outer housing away from the power member 40, thus ensuring the stability of the motion transmission between the first gear and the adjustment gear 52.

Specifically, a surface of the knob housing 531 facing the second partition wall 12 is of a circular structure. A plurality of positioning grooves E are defined to form a ring on the bottom of the storage groove D. The adjustment mechanism further includes a positioning member 55 disposed on the second partition wall 12, and located in one of the positioning grooves E. In this embodiment, in order to further improve the stability of motion transmission between the first gear and the adjustment gear 52, the positioning member 55 can be added to the second partition wall 12, and the plurality of positioning grooves E can be provided to form a ring on the bottom of the storage groove D to form different adjustment locations. In the initial state, the positioning member 55 is disposed in a positioning groove E. In the axial direction of the second pressing roller 22, when the knob housing 531 is moving away from the second end of the second pressing roller 22, the spring 54 is further compressed, the positioning member 55 is separated from the positioning groove E. When the knob housing 531 is rotated, and the spring 54 is reset, the positioning member 55 is disposed in another positioning groove E.

It is understandable that scales may be marked on an outside wall of the knob housing 531 according to the different positioning grooves E, so as to facilitate the user to adjust to different adjustment locations to adjust the knob housing 531 to different positions and fix the knob housing 531.

Specifically, the cutting roller mechanism 30 includes a first cutting roller 31 and a second cutting roller 32. Both ends of the first cutting roller 31 and both ends of the second cutting roller 32 are rotatably disposed on the first partition wall 11 and the second partition wall 12, and the two ends of the first cutting roller 31 and the second cutting roller 32 are parallel to each other and spaced apart from each other. A second gear 33 and a third gear 34 are rotatably disposed on that second partition wall 12. The second gear 33 is meshed with the third gear 34. An end of the first cutting roller 31 away from the first partition wall 11 is connected to the second gear 33, an end of the second cutting roller 32 away from the first partition wall 11 is connected to the third gear 34. The multi-functional noodle making device 100 further includes a transmission mechanism 60. The transmission mechanism 60 is disposed on the first partition wall 11. The transmission mechanism 60 is respectively connected to the output end of the power member 40, the first cutting roller 31, the second cutting roller 32 and the first pressing roller 21 for transmission of motion. The power member 40 drives the first cutting roller 31, the second cutting roller 32 and the first pressing roller 21 to rotate through the transmission mechanism 60. In the present embodiment, a plurality of annular protrusions (not shown) can be disposed on peripheral walls of the first cutting roller 31 and the second cutting roller 32. Two adjacent annular protrusions form a cutting groove (not shown). Each annular protrusion partly extends into a corresponding cutting groove to facilitate the cutting of dough. It is understandable that noodles with different widths can be made by adjusting a distance between the two adjacent annular protrusions. The second gear 33 and the third gear 34 are meshed with each other, so that the second pressing roller 22 and the first cutting roller 31 are connected for transmission of motion. When the power member 40 drives the first pressing roller 21 to rotate through the transmission mechanism 60, the first gear and the adjustment gear 52 are meshed, so that the second pressing roller 22 rotates synchronously to drive the first cutting roller 31 and the second cutting roller 32 to rotate. It is understandable that the connection between the second pressing roller 22 and the first cutting roller 31 for transmission of motion may be a gear transmission connection or a belt transmission connection, which is not specifically defined herein.

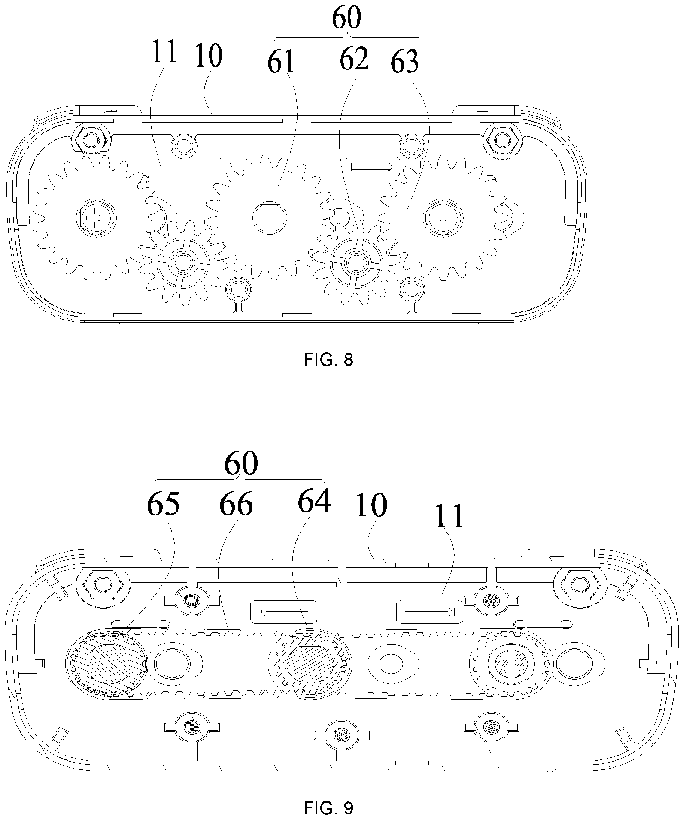

As shown in FIG. 8, specifically, the transmission mechanism 60 includes a driving gear 61 rotatably disposed on the first partition wall 11, and connected to the end of the first pressing roller 21 remote from the second partition wall 12 and to the output end of the power member 40; an idler gear 62 rotatably disposed on the first partition wall 11, engaged with the driving gear 61, and positioned between the first pressing roller 21 and the first cutting roller 31; and a driven gear 63 rotatably disposed on the first partition wall 11, connected to the end of the first cutting roller 31 remote from the second partition wall 12, and meshed with the idler gear 62. As an alternative embodiment, that first cutting roller 31, the second cutting roller 32, the first pressing roller 21, and the second pressing roller 22 are connected in the gear transmission way. Specifically, when the power member 40 drives the driving gear 61 to rotate, the first gear transmits torque to the second pressing roller 22 to rotate the second pressing roller 22. For the idler gear 62 meshes with the driving gear 61 and the driven gear 63, respectively, the driven gear 63 receives torque through the idler gear 62 to rotate the first cutting roller 31 and rotate the second cutting roller 32 through the second gear 33 and the third gear 34.

As shown in FIG. 9, in particular, the transmission mechanism 60 includes: a driving pulley 64 rotatably disposed on the first partition wall 11, connected to the end of the first pressing roller 21 remote from the second partition wall 12 and to the output end of the power member 40; a driven pulley 65 rotatably disposed on the first partition wall 11 and connected to the end of the first cutting roller 31 remote from the second partition wall 12. The driven pulley 65 and the driving pulley 64 are connected to transmit motion by a belt 66. In this embodiment, the first cutting roller 31, the second cutting roller 32, the first pressing roller 21, and the second pressing roller 22 are connected to transmit motion by the belt 66. Specifically, when the power member 40 drives the driving pulley 64 to rotate, the first gear transmits torque to the second pressing roller 22 to rotate the second pressing roller 22. For the driven pulley 65 and the driving pulley 64 are connected to transmit motion by the belt 66, the driven pulley 65 receives torque through the driving pulley 64 to rotate the first cutting roller 31 and rotate the second cutting roller 32 through the second gear 33 and the third gear 34.

As a further alternative embodiment, the multi-functional noodle making device 100 further includes a scraper disposed on the cutting roller mechanism 30. The scraper is configured to remove dough remaining on the cutting roller mechanism 30. In the present embodiment, the scraper (not shown) can be disposed on the outer housing, and the scraper is disposed along a longitudinal direction of the first cutting roller 31 or along a longitudinal direction of the second cutting roller 32, so as to facilitate the separation of dough from the first cutting roller 31 or the second cutting roller 32 and prevent the dough from adhering to the first cutting roller 31 or to the second cutting roller 32.

It is understandable that the scraper may be provided with a plurality of arc-shaped portions (not shown), the arc-shaped portions are disposed in the cutting grooves, and the arc-shaped portions are formed by bending from the noodle making groove A towards the noodle exiting groove B.

Specifically, the outer housing includes an upper outer housingc (not labeled in the figures), the pressing roller mechanism 20, the cutting roller mechanism 30 and the power member 40 being all disposed on the upper outer housingc, and at least two noodle making grooves A being defined on the upper outer housingc; and a lower outer housing (not labeled in the figures). The lower outer housing is detachably disposed on the upper outer housingc, and at least two noodle exiting grooves B are defined on the lower outer housing. In this embodiment, dust-proof covers 70 can prevent dust from entering the noodle making grooves A when not in use, and can also be used to cover the other noodle making grooves A when one of the noodle making functions, so as to prevent fingers from straying into the noodle making grooves A or foreign matters from entering the noodle making grooves A, and improve the use safety.

Secondly, the user can remove the lower outer housing from the upper outer housingc so as to expose internal parts such as the pressing roller mechanism 20 and the cutting roller mechanism 30, thus to facilitate the user to clean the internal parts.

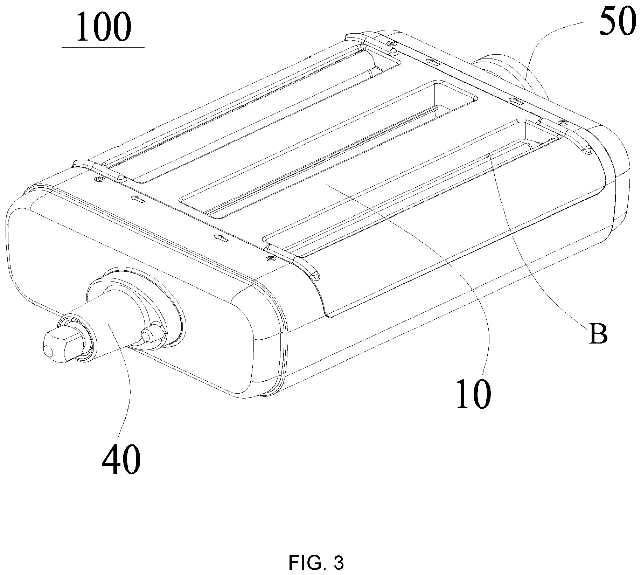

As shown in FIG. 3, as another alternative embodiment, the multi-functional noodle making device 100 further includes at least two dust-proof covers 70 which are respectively fitted on the two noodle making grooves A. At least two dust-proof covers 70 can be given, and the two dust-proof covers 70 are configured to cover the two noodle making grooves A.

The above are only preferred embodiments of the present application, and do not limit the scope of the present application thereto. Under the concept of the present application, any equivalent mechanism transformation made according to the description and drawings of the present application, or direct/indirect application in other related technical fields fall within the scope of the present application.

## Claims

1. A multi-functional noodle making device, **characterized by** comprising:
a housing, an upper surface of the housing defined with at least two noodle making grooves, a lower surface of the housing defined with at least two noodle exiting grooves, and the noodle making grooves and the noodle exiting grooves being arranged in a one-to-one correspondence;
a pressing roller mechanism disposed in the housing, and located in one of the noodle making grooves;
a cutting roller mechanism disposed in the housing, located in another of the noodle making grooves, and connected to the pressing roller mechanism for transmission of motion;
a power member disposed on the housing, an output end of the power member being connected to the pressing roller mechanism or the cutting roller mechanism for transmission of motion; and
wherein, when a dough is placed in the two noodle making grooves, the power member drives the pressing roller mechanism to perform a pressing operation and the cutting roller mechanism to perform a cutting operation.

2. The multi-functional noodle making device of claim 1, wherein the housing comprises:
an outer housing, the noodle making grooves and the noodle exiting grooves being respectively disposed on an upper surface and a lower surface of the outer housing;
a first partition wall disposed in the outer housing; and
a second partition wall disposed in the outer housing, wherein two ends of the pressing roller mechanism and two ends of the cutting roller mechanism are respectively disposed on the first partition wall and the second partition wall, and the power member is disposed on a surface of the first partition wall away from the second partition wall.

3. The multi-functional noodle making device of claim 2, wherein the second partition wall is defined with an adjustment hole, the pressing roller mechanism comprises a first pressing roller and a second pressing roller, two ends of the first pressing roller are respectively rotatably disposed on the first partition wall and the second partition wall, a first end of the second pressing roller is rotatably disposed on the first partition wall, a second end of the second pressing roller is disposed in the adjustment hole, the first pressing roller and the second pressing roller are arranged side by side and at intervals, a diameter of the adjustment hole is larger than a diameter of the second pressing roller, and the multi-functional noodle making device further comprises:
a first gear rotatably disposed on the second partition wall, and connected to an end of the first pressing roller facing the adjustment hole;
an adjustment gear sleeved on the second end of the second pressing roller, abutting against the second partition wall, and meshed with the first gear; and
an adjustment mechanism disposed on the second partition wall, and configured to adjust a position of the second end of the second pressing roller in the adjustment hole to adjust a distance between the first pressing roller and the second pressing roller.

4. The multi-functional noodle making device of claim 3, wherein the adjustment mechanism further comprises:
a knob rotatably disposed on a side wall of the outer housing away from the power member, the knob being penetrated by the second end of the second pressing roller and rotatably connected to the second end of the second pressing roller; and
wherein, the position of the second end of the second pressing roller in the adjustment hole is adjusted by adjusting a position of the knob on the outer housing.

5. The multi-functional noodle making device of claim 4, wherein the knob comprises a knob housing defining a storage groove and a cover covering the storage groove to form a cavity, the second end of the second pressing roller is extended into the cavity, the adjustment mechanism further comprises:
a spring sleeved on the second end of the second pressing roller; and
a nut threaded with the second end of the second pressing roller, an outer diameter of the nut being larger than a diameter of the spring, and an inner diameter of the nut being smaller than the diameter of the spring, two ends of the spring respectively abutting against a bottom of the storage groove and the nut, and the nut pressing an end of the spring away from the cover against the bottom of the storage groove.

6. The multi-functional noodle making device of claim 5, wherein a surface of the knob housing facing the second partition wall is of a circular structure, a plurality of positioning grooves are defined in a ring on the bottom of the storage groove, the adjustment mechanism further comprises:
a positioning member disposed on the second partition wall and received in one of the positioning grooves.

7. The multi-functional noodle making device of claim 3, wherein the cutting roller mechanism comprises a first cutting roller and a second cutting roller, two ends of the first cutting roller and two ends of the second cutting roller are respectively rotatably arranged on the first partition wall and the second partition wall, and the two ends of the first cutting roller and the second cutting roller are parallel to each other and spaced apart from each other, a second gear and a third gear are rotatably disposed on the second partition wall, the second gear is meshed with the third gear, an end of the first cutting roller away from the first partition wall is connected to the second gear, and an end of the second cutting roller away from the first partition wall is connected to the third gear, the multi-functional noodle making device further comprises:
a transmission mechanism disposed on the first partition wall, and connected to the output end of the power member, the first cutting roller, the second cutting roller and the first pressing roller respectively for transmission of motion, wherein the power member drives the first cutting roller, the second cutting roller and the first pressing roller to rotate through the transmission mechanism.

8. The multi-functional noodle making device of claim 7, wherein the transmission mechanism comprises:
a driving gear rotatably disposed on the first partition wall, and connected to an end of the first pressing roller away from the second partition wall and to the output end of the power member;
an idler gear rotatably disposed on the first partition wall, meshing with the driving gear, and positioned between the first pressing roller and the first cutting roller; and
a driven gear rotatably disposed on the first partition wall, connected to an end of the first cutting roller away from the second partition wall, and meshing with the idler gear.

9. The multi-functional noodle making device of claim 7, wherein the transmission mechanism comprises:
a driving pulley rotatably disposed on the first partition wall, and connected to an end of the first pressing roller away from the second partition wall and to the output end of the power member; and
a driven pulley rotatably disposed on the first partition wall, and connected to an end of the first cutting roller away from the second partition wall and to the driving pulley through belt transmission.

10. The multi-functional noodle making device of claim 2, further comprising a scraper disposed on the cutting roller mechanism and configured to remove dough remaining on the cutting roller mechanism.

11. The multi-functional noodle making device of claim 2, wherein the outer housing comprises:
an upper outer housing, wherein the pressing roller mechanism, the cutting roller mechanism and the power member are all disposed on the upper outer housing, and the at least two noodle making grooves are defined on the upper outer housing; and
a low outer housing detachably disposed on the upper outer housing, and defining the at least two noodle exiting grooves.

12. The multi-functional noodle making device of claim 1, further comprising at least two dust-proof covers respectively covering the two noodle making groove.

13. The multi-functional noodle making device of claim 1, wherein the pressing roller mechanism and the cutting roller mechanism are connected by gear mechanisms for transmission of motion.

14. The multi-functional noodle making device of claim 1, wherein the pressing roller mechanism and the cutting roller mechanism are connected by belt mechanisms for transmission of motion.

15. The multi-functional noodle making device of claim 1, wherein the power member is a motor.

16. The multi-functional noodle making device of claim 5, wherein an outside wall of the knob housing is marked with scales.

17. The multi-functional noodle making device of claim 3, wherein the distance between the first pressing roller and the second pressing roller is not less than 0.3 mm and not more than 3mm.
